# EUROPÄISCHE PATENTANMELDUNG

(11) **EP 0 881 497 A1**
(43) Veröffentlichungstag der Anmeldung: **02.12.1998**
(21) Anmeldenummer: 98108885.9
(22) Anmeldetag: 15.05.1998
(51) Int. Cl.: G01P 3/48, G01P 3/481

(54) **Anordnung zur Drehzahlmessung an einer Brennkraftmaschine**

(30) Priorität: 16.05.1997 DE 19720698
(71) Anmelder: ROBERT BOSCH GMBH, 70442 Stuttgart (DE)
(72) Erfinder: Anlauf, Juergen, 73035 Goeppingen (DE); Sieg, Raymond, 73732 Esslingen (DE); Fischer, Uwe, 71409 Schwaikheim (DE); Lehmann, Siegfried, 73061 Ebersbach (DE); Nobis, Guenter, 73240 Wendlingen (DE)

(57) **Zusammenfassung**

Es wird eine Anordnung zur Drehzahlmessung an einer Brennkraftmaschine, die einen Generator enthält, der von der Brennkraftmaschine angetrieben wird, angegeben. Dabei wird mit einer signalverarbeitenden Anordnung (22) aus einem am Generator oder an einer Last auftretenden Signal (U_{B}) die Drehzahl der Brennkraftmaschine mittels Frequenz-Demodulation (21) durch Auswertung sowohl eines bestimmten Signalanteils höherer Frequenz als auch eines bestimmten Signalanteils niedriger Frequenz ermittelt. Dies erfolgt bei bekannter Zylinderzahl der Brennkraftmaschine und bekanntem Übersetzungsverhältnis zwischen der Brennkraftmaschine und dem von ihr angetriebenen Generator. Parallel zur Frequenzdemodulation (21) ist die Reihenschaltung eines schmalbandigen Bandpaßfilters (23) und eines Komparators (24) angeordnet, dessen Ausgangssignal der signalverarbeitenden Anordnung (22) zugeführt wird. Das Bandpaßfilter ist vorteilhaft auf die Reiswelligkeit des Generatorsignals (F_{Gen}) ausgerichtet und nicht hoch verstärkend ausgelegt.

## Beschreibung

### Stand der Technik

Die Erfindung geht aus von einer Anordnung zur Drehzahlmessung an einer Brennkraftmaschine, die einen Generator enthält, der von der Brennkraftmaschine angetrieben wird, der im Oberbegriff des Anspruchs 1 definierten Gattung.

Eine derartige Anordnung ist aus der EP 0 408 877 A2 bekannt. Danach ist zur Drehzahlermittlung einer Brennkraftmaschine, sei es ein Otto- oder auch ein Dieselmotor, die einen von ihr angetriebenen Generator enthält, eine Anordnung vorgesehen, bei der eine signalverarbeitende Anordnung aus dem am Generator bzw. der Last anliegenden Signal, welches einen Signalanteil höherer und einen niedrigerer Frequenz enthält, die Drehzahl ermittelt. Dabei wird mittels eines Frequenz-Demodulators durch Auswertung sowohl eines bestimmten Signalanteils höherer Frequenz als auch eines bestimmten Signalanteils niedriger Frequenz aus beiden Signalanteilen zusammen das Übersetzungsverhältnis des Antriebs zwischen Brennkraftmaschine und Generator ermittelt. Dieses Übersetzungsverhältnis geht, ebenso wie die Zylinderzahl der Brennkraftmaschine, in die Berechnung der Drehzahl aus dem höherfrequenten Signalanteil ein. Aus dem niederfrequenten Signalanteil wird durch die Frequenz-Demodulation im Frequenz-Demodulator der Arbeitstakt und aus diesem bei bekannter Zylinderzahl die Drehzahl der Brennkraftmaschine ermittelt. Dieses Ergebnis wird zur Ermittlung des genannten Übersetzungsverhältnisses verwendet.

Bei diesem bekannten Verfahren werden zur Ermittlung der Drehzahl jeweils frequenzmodulierte Signalanteile der Generatorfrequenz ausgewertet. In der Praxis hat sich herausgestellt, daß dieses Verfahren insbesondere bei Dieselmotoren sehr zuverlässig arbeitet. Die in der Praxis jedoch vermehrt eingesetzte elektronische Dieselsteuerung, d.h. das Fahrpedal wirkt nicht mehr direkt auf mechanische, sondern über elektronisch gesteuerte Mittel auf die Motorsteuerung, hat bewirkt, daß dadurch erhebliche Störsignale auf das Bordnetz gelangen. Dadurch wird die vorstehend beschriebene Anordnung zur Drehzahlmessung erheblich gestört.

### Vorteile der Erfindung

Die erfindungsgemäße Anordnung zur Drehzahlmessung einer Brennkraftmaschine mit den kennzeichnenden Merkmalen des Anspruchs 1 hat demgegenüber den Vorteil, eine einfache und zuverlässige Lösung zur Verfügung zu stellen, mit welcher auch aus einem stark gestörten Eingangssignal die korrekte Motordrehzahl bestimmt werden kann.

Gemäß der Anordnung nach der Erfindung wird dazu prinzipiell parallel zur Frequenzdemodulation die Reihenschaltung eines schmalbandigen Bandpaßfilters und eines Komparators angeordnet, dessen Ausgangssignal der signalverarbeitenden Anordnung zugeführt wird.

Durch die in den weiteren Ansprüchen niedergelegten Maßnahmen sind vorteilhafte Weiterbildungen und Verbesserungen der im Anspruch 1 angegebenen Anordnung möglich.

Nach einer besonders zweckmäßigen Weiterbildung der Erfindung ist die Mittenfrequenz des Bandpaßfilters auf die Generatorfrequenz F_{Gen} ausgerichtet.

In vorteilhafter Ausgestaltung der erfindungsgemäßen Anordnung ist das Bandpaßfilter nicht hoch verstärkend ausgelegt.

Gemäß einer besonders vorteilhaften Ausgestaltung der Erfindung enthält die signalverarbeitende Anordnung einen Mikrokontroller bzw. wird durch einen solchen im wesentlichen gebildet. Dadurch wird mit einfachen Mitteln neben der gegebenen Verarbeitungskapazität auch eine flexible Anpassung erreicht.

### Zeichnung

Die Erfindung ist anhand eines in der Zeichnung dargestellten Ausführungsbeispiels in der nachfolgenden Beschreibung näher erläutert. Es zeigen:

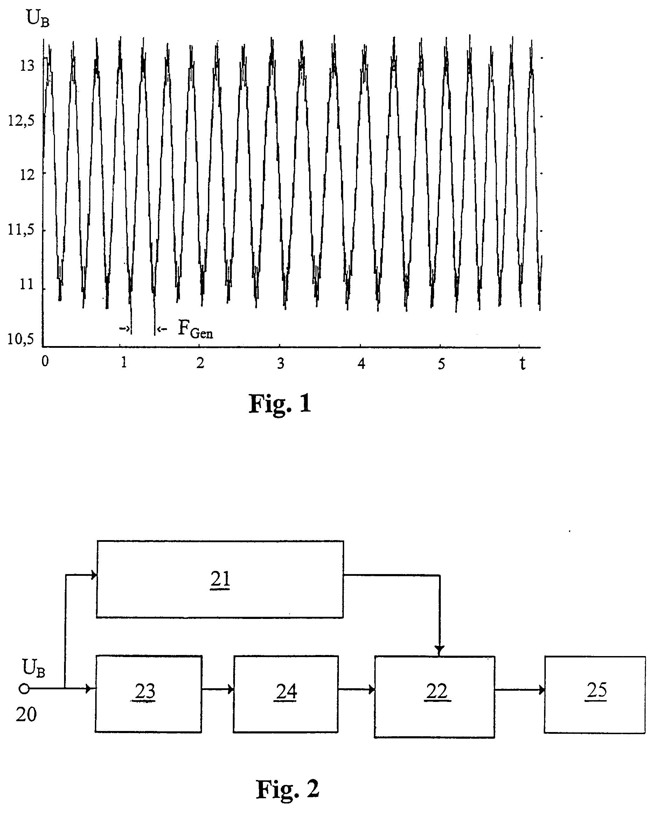

- Fig. 1: schematisch, teilweise stark hervorgehoben, die auszuwertende Generator- bzw. Batteriespannung U_{B} über der Zeit t, und
- Figj. 2: schematisch in einem Blockschaltbild den Aufbau der erfindungsgemäßen Anordnung.

### Beschreibung des Ausführungsbeispiels

Anhand der Fig. 1 ist schematisch, teilweise stark hervorgehoben, die auszuwertende Generator- bzw. Batteriespannung U_{B} über der Zeit t dargestellt. Dabei ist nur der Wechselanteil der vom Generator erzeugten Spannung U_{B} gezeigt, der die sogenannte Generatorrestwelligkeit überlagert ist. Die Frequenz F_{Gen} stellt im wesentlichen den höherfrequenten Signalanteil dar, in welchem die Information über die Drehzahl der Brennkraftmaschine steckt und aus dem, insbesondere bei höheren und hohen Drehzahlen, die Drehzahl ermittelt wird. In der Generatorrestwelligkeit ist jedoch auch ein Signalanteil mit niedriger Frequenz enthalten.

Der niederfrequente Signalanteil wird, beispielsweise durch den Frequenzdemodulator 21, wie in Fig. 2 dargestellt, durch Frequenzdemodulation ermittelt und einer signalverarbeitenden Anordnung 22 zugeführt. Das Eingangssignal für den Frequenzdemodulator 21 ist die Spannung U_{B}, die vom Generator, welcher von der Brennkraftmaschine angetrieben wird, an eine Last, beispielsweise die Batterie eines Kraftfahrzeuges, abgegeben wird. Diese Bordnetzspannung kann mit starken Störungen überlagert sein, die nicht von der Generatorwelligkeit her rühren. In der Praxis hat sich als ein besonderer Einstreuer die zunehmend bei Dieselkraftfahrzeugen verwendete EDC (Elektronische Diesel Steuerung) erwiesen, wodurch die Drehzahl nicht immer korrekt bestimmt werden kann.

Die Anordnung nach der Erfindung sieht daher parallel zur Frequenzdemodulation einen besonderen Zweig vor. Dieser besteht aus einem schmalbandigen Bandpaßfilter 23 und einem Komparator 24. Das am Eingang 20 anstehende Eingangssignal U_{B} wird also sowohl dem Frequenzdemodulator 21 als auch dem Bandpaßfilter 23 zugeführt.

Das schmalbandige Bandpaßfilter 23 ist entsprechend vorteilhafter Ausgestaltung auf die Mittenfrequenz F_{Gen} der Generatorrestwelligkeit abgestimmt. In der Praxis kann dies bei etwa 5 kHz liegen mit einem Durchlaßbereich zwischen 3 und 15 kHz. Weiterhin ist das Bandpaßfilter 23 nicht hoch verstärkend ausgelegt. Dadurch werden unnötige und unangenehme Schwingungen vermieden.

Das schmalbandige Bandpaßfilter 23 begrenzt die dem Komparator 24 zugeführten Signalanteile der Spannung U_{B} auf diejenigen Werte, welche für die Auswertung in Frage kommen und einen relevanten Betrag leisten. Der Komparator 24 vergleicht diese vom Bandpaßfilter 23 gelieferten Signalwerte mit vorgegebenen oberen und unteren Grenzwerten, um das der signalverarbeitenden Anordnung 22 zugeführte Signal dieser möglichst verarbeitungsgerecht und ohne Störungen zuzuführen. Diese bestimmt daraus unter zu Hilfenahme des ermittelten Verhältnisses zwischen der Generatorrestwelligkeit F_{Gen} und der Motordrehzahl der Brennkraftmaschine deren Drehzahl, welche auf einer Anzeige 25 angezeigt wird.

Die Arbeitsweise der Ermittlung der Drehzahl sowie des Verhältnisses zwischen der Generatorrestwelligkeit F_{Gen} und der Motordrehzahl der Brennkraftmaschine erfolgt im übrigen in der Weise, wie sie in oben genannter Druckschrift beschrieben ist. Insofern wird diese dazu hiermit ausdrücklich in diese Beschreibung mit einbezogen.

Die signalverarbeitende Anordnung 22 enthält entsprechend einer bevorzugten Ausführungsform der erfindungsgemäßen Anordnung vorzugsweise einen Mikrokontroller bzw. wird durch einen solchen im wesentlichen gebildet. Dadurch wird mit einfachen Mitteln neben der gegebenen Verarbeitungskapazität auch eine flexible Anpassung erreicht.

Mit der erfindungsgemäß gestalteten Anordnung ist in vorteilhafter Weise dafür Sorge getragen, daß zuverlässig sowohl bei Ottomotoren als auch bei Dieselmotoren die Drehzahl auch bei erheblichen Störeinflüssen im Eingangssignal gemessen werden können. Die Anordnung ist somit gegen Störeinflüsse auf dem Bordnetz erheblich unempfindlicher als bekannte Verfahren, so daß es auch bei Dieselkraftfahrzeugen mit elektronischer Steuerung des Fahrpedals vorteilhaft einsetzbar ist. Die erfindungsgemäß gestaltete Drehzahlmessung wird besonders vorteilhaft für Test- und Prüfzwecke bei Otto- und Dieselmotoren eingesetzt.

Zur Frequenzdemodulation ist beispielsweise ein analog arbeitender FM-Demodulator geeignet. Eine andere Möglichkeit sieht eine Digitalisierung der zu demodulierenden Signale vor. Die digitalisierten Signale können beispielsweise mittels Fouriertransformation, vorzugsweise FFT, im Frequenzbereich oder auch im Zeitbereich unmittelbar demoduliert werden.

## Patentansprüche

1. Anordnung zur Drehzahlmessung an einer Brennkraftmaschine, die einen Generator enthält, der von der Brennkraftmaschine angetrieben wird, und wobei mit einer signalverarbeitenden Anordnung (22) aus einem am Generator oder an einer Last auftretenden Signal (U_{B}), bei bekannter Zylinderzahl der Brennkraftmaschine und bekanntem Übersetzungsverhältnis zwischen der Brennkraftmaschine und dem von ihr angetriebenen Generator, die Drehzahl der Brennkraftmaschine mittels einer Frequenz-Demodulation (21) durch Auswertung sowohl eines bestimmten Signalanteils höherer Frequenz als auch eines bestimmten Signalanteils niedriger Frequenz ermittelt wird, dadurch gekennzeichnet, daß parallel zur Frequenzmodulation (21) die Reihenschaltung eines schmalbandigen Bandpaßfilters (23) und eines Komparators (24) angeordnet ist, dessen Ausgangssignal der signalverarbeitenden Anordnung (22) zugeführt wird.

2. Anordnung nach Anspruch 1, dadurch gekennzeichent, daß die Mittenfrequenz des Bandpaßfilters (23) auf die Generatorfrequenz F_{Gen} ausgerichtet ist.

3. Anordnung nach Anspruch 1 oder 2, dadurch gekennzeichnet, daß das Bandpaßfilter (23) nicht hoch verstärkend angelegt ist.

4. Anordnung nach einem der vorigen Ansprüche, dadurch gekennzeichnet, daß die signalverarbeitende Anordnung (22) einen Mikrokontroller enthält bzw. durch einen solchen im wesentlichen gebildet wird.
